# EUROPEAN PATENT APPLICATION

(11) **EP 4 622 326 A1**
(43) Date of publication of application: **24.09.2025**
(21) Application number: 23890514.5
(22) Date of filing: 27.10.2023
(51) Int. Cl.: H04W 24/08

(54) **MEASUREMENT RELAXATION METHOD, AND TERMINAL AND NETWORK-SIDE DEVICE**

(30) Priority: 15.11.2022 CN 202211431080
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Walaski, Jan Filip
(86) International application number: PCT/CN2023/126997
(87) International publication number: WO 2024/104078

(57) **Abstract**

The present application belongs to the technical field of communications. Disclosed are a measurement relaxation method, and a terminal and a network-side device. The measurement relaxation method in the embodiments of the present application comprises: in a scenario where a plurality of objects are configured, a terminal performing measurement relaxation on a target object among the plurality of objects, wherein the measurement relaxation comprises at least one of the following: RLM measurement relaxation; BFD measurement relaxation; and RRM measurement relaxation.

## Description

### CROSS-REFERENCE TO RELATED APPLICATIONS

This application claims priority to Chinese Patent Application No. 202211431080.7 filed on November 15, 2022, which is incorporated herein by reference in its entirety.

### TECHNICAL FIELD

This application relates to the field of communication technologies, and specifically, to a measurement relaxation method, a terminal, and a network side device.

### BACKGROUND

To ensure reliability of communication of a terminal, the terminal usually needs to perform some measurements. For example, reliability of a radio link is ensured through radio link monitor (Radio Link Monitor, RLM) measurement. For another example, reliability of a beam is ensured through beam failure detection (Beam Failure Detection, BFD) measurement. Currently, for both the RLM measurement and the BFD measurement, the terminal only supports RLM measurement and BFD measurement on a fixed object (for example, a transmission reception point (Transmission Reception Point, TRP)), that is, only supports RLM measurement and BFD measurement in a single-object scenario. However, in some related technologies, a multi-object (for example, multi-TRP) scenario is introduced. As a result, an RLM measurement technology and a BFD measurement technology of the terminal cannot be applied to the multi-object scenario. Consequently, measurement performance of the terminal is poor.

### SUMMARY

Embodiments of this application provide a measurement relaxation method, a terminal, and a network side device, to resolve a problem of poor measurement performance of the terminal.

According to a first aspect, a measurement relaxation method is provided, including:
performing, by a terminal when a plurality of objects are configured, measurement relaxation on a target object in the plurality of objects, where the measurement relaxation includes at least one of the following:
radio link monitor (RLM) measurement relaxation;
beam failure detection (BFD) measurement relaxation; and
radio resource management (RRM) measurement relaxation.

According to a second aspect, a measurement relaxation method is provided, including:
sending, by a network side device, a downlink message to a terminal, where the downlink message is configured to indicate the terminal to perform measurement relaxation on a target object in a plurality of objects, and the measurement relaxation includes at least one of the following:
RLM measurement relaxation;
BFD measurement relaxation; and
RRM measurement relaxation.

According to a third aspect, a measurement relaxation apparatus is provided, including:
a first execution module, configured to: perform, when a plurality of objects are configured, measurement relaxation on a target object in the plurality of objects, where the measurement relaxation includes at least one of the following:
RLM measurement relaxation;
BFD measurement relaxation; and
RRM measurement relaxation.

According to a fourth aspect, a measurement relaxation apparatus is provided, including:
a first sending module, configured to send a downlink message to a terminal, where the downlink message is configured to indicate the terminal to perform measurement relaxation on a target object in a plurality of objects, and the measurement relaxation includes at least one of the following:
RLM measurement relaxation;
BFD measurement relaxation; and
RRM measurement relaxation.

According to a fifth aspect, a terminal is provided. The terminal includes a processor and a memory, the memory stores a program or instructions executable on the processor, and the program or the instructions, when executed by the processor, implements steps of the measurement relaxation method on a terminal side provided in embodiments of this application.

According to a sixth aspect, a terminal is provided, including a processor and a communication interface. The processor or the communication interface is configured to: perform, when a plurality of objects are configured, measurement relaxation on a target object in the plurality of objects, where the measurement relaxation includes at least one of the following: RLM measurement relaxation; BFD measurement relaxation; and RRM measurement relaxation.

According to a seventh aspect, a network side device is provided. The network side device includes a processor and a memory, the memory stores a program or instructions executable on the processor, and the program or the instructions, when executed by the processor, implements steps of the measurement relaxation method on a network side provided in embodiments of this application.

According to an eighth aspect, a network side device is provided, including a processor and a communication interface. The communication interface is configured to send a downlink message to a terminal, where the downlink message is configured to indicate the terminal to perform measurement relaxation on a target object in a plurality of objects, and the measurement relaxation includes at least one of the following: RLM measurement relaxation; BFD measurement relaxation; and RRM measurement relaxation.

According to a ninth aspect, a measurement relaxation system is provided, including a terminal and a network side device. The terminal can be configured to perform steps of the measurement relaxation method on a terminal side provided in embodiments of this application, and the network side device can be configured to perform steps of the measurement relaxation method on a network side provided in embodiments of the present application.

According to a tenth aspect, a readable storage medium is provided. The readable storage medium stores a program or instructions, and the program or the instructions, when executed by a processor, implements the measurement relaxation method on a terminal side provided in embodiments of this application, or implements steps of the measurement relaxation method on a network side provided in embodiments of this application.

According to an eleventh aspect, a chip is provided. The chip includes a processor and a communications interface, the communications interface is coupled to the processor, and the processor is configured to run a program or instructions, to implement the measurement relaxation method on a terminal side provided in embodiments of this application, or implement the measurement relaxation method on a network side provided in embodiments of this application.

According to a twelfth aspect, a computer program/program product is provided. The computer program/program product is stored in a storage medium. The computer program/program product is executed by at least one processor, to implement steps of the measurement relaxation method on a terminal side provided in embodiments of this application, or the computer program/program product is executed by at least one processor, to implement steps of the measurement relaxation method on a network side provided in embodiments of this application.

In embodiments of this application, a terminal performs, in a measurement scenario of a plurality of objects, measurement relaxation on a target object in the plurality of objects, where the measurement relaxation includes at least one of the following: RLM measurement relaxation; BFD measurement relaxation; and RRM measurement relaxation. In this way, the measurement relaxation may be performed in the measurement scenario of the plurality of objects, to improve measurement performance of the terminal.

### BRIEF DESCRIPTION OF THE DRAWINGS

FIG. 1 is a block diagram of a wireless communication system to which an embodiment of this application may be applied;
FIG. 2 is a flowchart of a measurement relaxation method according to an embodiment of this application;
FIG. 3 is a flowchart of another measurement relaxation method according to an embodiment of this application;
FIG. 4 is a structural diagram of a measurement relaxation apparatus according to an embodiment of this application;
FIG. 5 is a structural diagram of another measurement relaxation apparatus according to an embodiment of this application;
FIG. 6 is a structural diagram of a communication device according to an embodiment of this application;
FIG. 7 is a structural diagram of another terminal according to an embodiment of this application; and
FIG. 8 is a structural diagram of another network side device according to an embodiment of this application.

### DETAILED DESCRIPTION

The following clearly describes the technical solutions in embodiments of this application with reference to the accompanying drawings in embodiments of this application. It is clear that, the described embodiments are some of embodiments of this application rather than all of embodiments. All other embodiments obtained by a person of ordinary skill in the art based on embodiments of this application shall fall within the protection scope of this application.

The terms "first", "second", and the like in the specification and claims of this application are used to distinguish between similar objects, but are not used to describe a specific sequence or order. It may be understood that the terms used in such a way are interchangeable in proper circumstances, so that embodiments of this application can be implemented in sequences other than the sequence illustrated or described herein. Objects distinguished by using "first" and "second" are generally of one class, and a quantity of the objects are not limited. For example, there may be one or more first objects. In addition, "and/or" in the specification and the claims represents at least one of connected objects, and the character "/" generally represents an "or" relationship between associated objects.

It is worth noting that, the technologies described in embodiments of this application are not limited to a long term evolution (Long Term Evolution, LTE)/LTE-advanced (LTE-Advanced, LTE-A) system, and may be further applied to other wireless communication systems, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and other systems. The terms "system" and "network" in embodiments of this application may usually be used interchangeably. The technology described in embodiments of this application can be applied to the systems and radio technologies mentioned above, and can also be applied to other systems and radio technologies. The following describes a new radio (New Radio, NR) system for example, and NR terms are used in most of the following descriptions. However, these technologies may alternatively be applied to an application in a system other than the NR system, for example, a 6th generation (6th Generation, 6G) system.

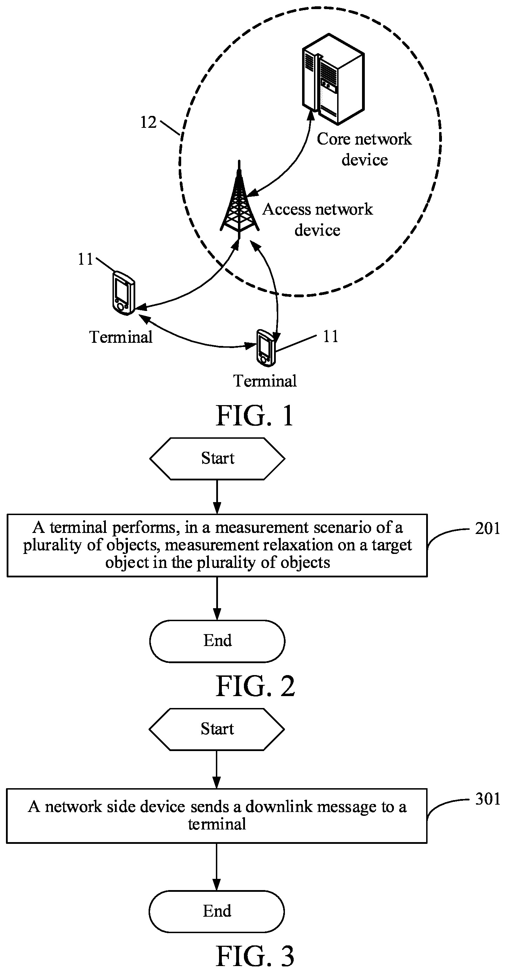

FIG. 1 is a block diagram of a wireless communication system to which an embodiment of this application may be applied. The wireless communication system includes a terminal 11 and a network side device 12. The terminal 11 may be a mobile phone, a tablet computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR) device /a virtual reality (virtual reality, VR) device, a robot, a wearable device (Wearable Device), a vehicle-mounted device (VUE), a pedestrian terminal (PUE), a smart home (a home appliance having a wireless communication function, for example, a refrigerator, a television, a washing machine, or furniture), a game console, a personal computer (personal computer, PC), a terminal side device such as a teller machines or a self-service machine. The wearable device includes a smart watch, a smart bracelet, a smart headphone, smart glasses, smart jewelry (a smart ring, a smart necklace, and a smart anklet), a smart wristband, smart clothes, and the like. It should be noted that, the specific type of the terminal 11 is not limited in embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (transmission reception Point, TRP), or other proper terms in the field. The base station is not limited to a specific technical term, provided that the same technical effect is achieved. It should be noted that, in embodiments of this application, only the base station in the NR system is introduced as an example, and a specific type of the base station is not limited.

The core network device may include but not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in embodiments of this application, only the core network in the NR system is introduced as an example, and a specific type of the core network is not limited.

The term "indication" in the specification and claims of this application may be an explicit indication or an implicit indication. The explicit indication may be understood as that a sending party explicitly notifies a receiving party of an operation that needs to be performed or a request result in a sent indication. The implicit indication may be understood as that the receiving party determines based on an indication sent by the sending party, and determines, based on a determining result, an operation that needs to be performed or a request result.

In embodiments of this application, for RLM/BFD measurement relaxation (RLM/BFD relaxation), the network side may configure corresponding measurement relaxation criteria (Relaxation criteria) for a terminal, including not-at-cell-edge (not-at-cell-edge) criteria and stationary (stationary) criteria. When the terminal satisfied a criterion configured by a network, corresponding measurement relaxation may be performed. For specific measurement relaxation requirements (requirements), refer to definitions in a protocol. Correspondingly, when the terminal performs measurement relaxation or exits measurement relaxation, the terminal may report a measurement relaxation state to the network side based on a network side configuration.

With reference to the accompanying drawings, the following provides detailed descriptions of a measurement relaxation method, a terminal, and a network side device provided in embodiments of this application by using some embodiments and application scenarios.

FIG. 2 is a flowchart of a measurement relaxation method according to an embodiment of this application. As shown in FIG. 2, the method includes the following steps.

Step 201: A terminal performs, in a measurement scenario of a plurality of objects, measurement relaxation on a target object in the plurality of objects, where the measurement relaxation includes at least one of the following:
radio link monitor (RLM) measurement relaxation;
beam failure detection (BFD) measurement relaxation; and
radio resource management (RRM) measurement relaxation.

In some implementations, the object includes at least one of the following:
a TRP, a cell, a reference signal (Reference Signal, RS), and a reference signal set (RS set).

The plurality of objects may be a plurality of TRPs, a plurality of measurement objects, a plurality of RSs, and a plurality of RS sets.

The plurality of TRPs and the plurality of RS sets may be in a one-to-one correspondence or a one-to-many correspondence, that is, one TRP corresponds to the plurality of RS sets, or a many-to-one correspondence, that is, the plurality of TRPs corresponds to one RS set. The plurality of TRPs and the plurality of RSs may be in a one-to-one correspondence or a one-to-many correspondence, that is, one TRP corresponds to the plurality of RSs, or a many-to-one correspondence, that is, the plurality of TRPs corresponds to one RS.

The plurality of TRPs may correspond to one cell, or the plurality of TRPs corresponds to a plurality of cells.

The measurement scenario of the plurality of objects may be a scenario in which the network configures radio link monitor (radio link monitor, RLM) measurement, beam failure detection (beam failure detection, BFD) measurement, or radio resource management (Radio resource management, RRM) measurement of the plurality of objects, for example, the network configures the RLM measurement of the plurality of TRPs (mTRPs) and/or the BFD measurement of the plurality of TRPs and/or the RRM measurement of the plurality of TRPs.

The target object may be all or some of the plurality of objects, for example, one TRP.

In some implementations, the measurement relaxation may be measurement relaxation in a dimension such as a time domain or a frequency domain, for example, including but not limited to at least one of the following:
a measurement period relaxation, for example, a measurement period is longer than a measurement period of normal measurement;
a measurement sampling quantity relaxation, for example, a measurement sampling quantity in first time is less than a measurement sampling quantity of the normal measurement;
a measurement indication interval relaxation, for example, the measurement indication interval is longer than a measurement indication interval of the normal measurement;
a measurement time relaxation, for example, no measurement is performed in second time, or a quantity of measurement times in second time is less than a quantity of measurement times of the normal measurement;
an upper-layer indication relaxation, for example, an upper-layer indication measurement is not performed in third time, or a quantity of upper-layer indication measurement times of in third time is less than a quantity of upper-layer indication measurement times of the normal measurement; and
a reference signal quantity relaxation, for example, a quantity of reference signals of the measurement is less than a quantity of reference signals of the normal measurement.

In this embodiment of this application, through steps, measurement relaxation may be performed in the measurement scenario of the plurality of objects, to improve measurement performance of the terminal.

In addition, in this embodiment of this application, problems of cell specific BFD relaxation (cell specific BFD relaxation) and TRP specific BFD relaxation (TRP specific BFD relaxation) may be resolved through steps, which are specifically described as follows.

The cell specific BFD relaxation may refer to that two BFD-RS sets need to be considered in a link recovery process, that is, the cell specific BFD relaxation needs to consider two BFD-RS sets of a serving cell (serving cell), in other words, the cell specific BFD relaxation needs to be performed based on the two BFD-RS sets. Two BFD-RS set measurements are combined to a cell specific (Cell specific) measurement to perform the corresponding BFD measurement relaxation.

The TRP specific BFD relaxation may refer to that each TRP separately performs BFD relaxation. For example, the terminal needs to perform measurement relaxation on the two BFD-RS sets.

In some related technologies, when the plurality of TRPs are configured to perform BFD (BFD in mTRP), the terminal performs BFD measurement on each TRP. In this way, the TRP specific BFD (TRP specific BFD) measurement relaxation cannot be performed through the cell specific BFD relaxation. However, in technical solutions provided in this application, the TRP specific BFD relaxation can be implemented by only performing measurement relaxation on a target TRP (for example, a primary TRP, a secondary TRP, or any TRP), to resolve the technical problems, thereby further improving the measurement performance of the terminal.

In addition, in some related technologies, some terminals only support BFD measurement relaxation and report for one TRP. If a TRP specific (Per-TRP) BFD relaxation introduces a new RRC configuration, that is, when the plurality of TRPs is configured to perform BFD (BFD in mTRP), some configurations are only applicable to a single TRP. In this way, an additional configuration needs to be introduced for the TRP specific BFD relaxation and corresponding reporting. Consequently, the configuration cannot be applicable to the terminal only supporting BFD measurement relaxation and reporting for one TRP, causing problems such as incompatibility. However, in the technical solutions provided in this application, measurement relaxation only needs to be performed on the target TRP (for example, the primary TRP, the secondary TRP, or any TRP), so that the scenario in which the plurality of TRPs perform BFD may be implemented, and the terminal only supporting BFD measurement relaxation and reporting for one TRP is compatible, to improve compatibility of the measurement relaxation.

In an optional implementation, the target object includes a secondary object in the plurality of objects or a primary object in the plurality of objects; or
the target object is any one of the plurality of objects.

The secondary object in the plurality of objects may be a secondary cell of the plurality of cells, a secondary TRP (secondary TRP or supplementary TRP) in the plurality of TRPs, a secondary RS set in the plurality of RS sets, or a secondary RS in the plurality of RSs. The primary object in the plurality of objects may be a primary cell of the plurality of cells, a primary TRP (primary TRP) in the plurality of TRPs, a primary RS set in the plurality of RS sets, or a primary RS in the plurality of RSs.

In this implementation, measurement relaxation may be implemented on the secondary TRP, the secondary cell, the secondary RS set, or the secondary RS, so that a connection of the terminal on the primary TRP, the primary cell, the primary RS set, or the primary RS is not affected, and power of the terminal can be saved, that is, measurement on the secondary TRP, the secondary cell, the secondary RS set, or the secondary RS is reduced.

In addition, in this implementation, measurement relaxation may also be implemented on the primary TRP, the primary cell, the primary RS set, or the primary RS. In this way, the power can be saved. In other words, measurement does not need to be performed on all TRPs, cells, RS sets, or the primary RS, and data transmission of the terminal on the secondary TRP, the secondary cell, the secondary RS set, or the secondary RS may not be affected.

That the target object is any one of the plurality of objects may be that the target object is one of the TRP, the cell, the RS, or the RS set. Specifically, the terminal may select one of the plurality of objects, to perform measurement relaxation on the one object, thereby saving the power.

Optionally, when the target object is any one of the plurality of objects, the method further includes:
reporting, by the terminal, second indication information to a network side, where the second indication information is configured to indicate the target object.

The second indication information may indicate, to the network side, which specific target object the target object is, that is, indicate on which TRP, cell, RS set, or RS the terminal performs measurement relaxation. The foregoing second indication information may carry identification information or association information of the target object.

The network side knows, through the second indication information, that the terminal performs measurement relaxation on the target object, so that the terminal and the network side have a consistent understanding of the measurement relaxation.

In an optional implementation, the method further includes:
reporting, by the terminal, first indication information to the network side, where the first indication information is configured to indicate at least one of the following:
a measurement state of the target object performing measurement; and
a measurement state change of the target object performing measurement.

The measurement state of the target object performing measurement is a measurement relaxation state. In other words, that measurement performed by the terminal on the target object is the measurement relaxation is indicated to the network side.

The measurement state change of the target object performing measurement may be that the measurement state of the target object changes from a normal measurement state to a measurement relaxation state, changes from a measurement relaxation state to a normal measurement state, enters a measurement relaxation state, or exits a measurement relaxation state.

In this embodiment of this application, the terminal may support two measurement states: the measurement relaxation state and the normal measurement state, and may further support measurement enhancement in some implementations.

In the foregoing implementations, because the measurement state or measurement state change is indicated to the network side, the terminal and the network side maintain consistent understanding of the measurement relaxation of the terminal, to avoid measurement understanding deviation between the terminal and the network side.

Optionally, the reporting, by the terminal, first indication information to the network side includes:
reporting, by the terminal, the first indication information to the network side when a preset condition is satisfied, where
the preset condition may be pre-configured by the network side, or may be specified in a protocol.

In some implementations, the preset condition includes at least one of the following:
a period condition and a measurement state change condition, where
the period condition represents that the terminal periodically sends the first indication information to the network side.

The measurement state change condition may be that the first indication information is sent when the measurement state of the terminal is switched from the normal state to the measurement relaxation state, the first indication information is sent when the measurement state of the terminal is switched from the measurement relaxation state to the normal state, or the first indication information is sent when the terminal enters or exits the measurement relaxation state.

In this implementation, because the first indication information is sent when the preset condition is satisfied, it can be avoided that the terminal frequently sends the indication information, to save transmission overheads.

It should be noted that, in some implementations, the preset condition may not be configured. For example, the terminal sends the first indication information before or after performing step 201.

It should be noted that, the first indication information and the second indication information may be sent through same or different messages or signaling.

In an optional implementation, the target object is determined through at least one of the following:
being specified in a protocol and being indicated by the network side.

For example, that the target object is the secondary object, the primary object, or any object is specified in the protocol.

It should be noted that, in this embodiment of this application, an example in which the object is the TRP is mainly used for description. For example, if that the target object is the secondary TRP, the primary TRP, or any TRP is specified in the protocol or indicated by the network side, for another object, refer to an implementation of the TPR.

In an optional implementation, the method further includes:
receiving, by the terminal, a network side indication, where the network side indication is configured to indicate at least one of the following:
performing, by the terminal, measurement relaxation on the secondary object; and
performing, by the terminal, measurement relaxation on the primary object, where
the target object includes the secondary object or the primary object.

The network side indication may be that the terminal receives a downlink message sent by the network side. For example, the downlink message includes at least one of the following:
indication content configured to indicate the terminal to perform measurement relaxation on the secondary object; and
indication content configured to indicate the terminal to perform measurement relaxation on the primary object.

In this implementation, the target object may be determined based on at least one of the network side indication. For example, the network side indicates that the target object is the secondary object or the primary object.

In an optional implementation, the performing, by a terminal, measurement relaxation on a target object in the plurality of objects includes:
obtaining, by the terminal, a first configuration, where the first configuration includes one set of measurement relaxation configurations or a plurality of sets of measurement relaxation configurations; and
performing, by the terminal, measurement relaxation on the target object in the plurality of objects based on the first configuration, where
the first configuration may be configured for the terminal by the network side, or may be understood as that the terminal receives the first configuration.

The plurality of sets of measurement relaxation configurations may be a plurality of sets of measurement relaxation configurations with different time domain configurations, may be a plurality of sets of measurement relaxation configurations with different frequency domain configurations, or may be a plurality of sets of measurement relaxation configurations with different signals or signal sets.

The plurality of sets of measurement relaxation configurations may also include at least one of the following: a plurality of measurement relaxation criteria (criteria), such as stationary (Stationary) criteria, low mobility (Low Mobility) criteria, and not-at-cell-edge criteria (Not-at-cell-edge criteria);
threshold parameters corresponding to the plurality of sets of measurement relaxation criteria, for example, thresholds corresponding to the stationary criteria, the low mobility criteria, and the not-at-cell-edge criteria; and threshold parameters corresponding to the plurality of sets of measurement relaxation criteria, for example, thresholds corresponding to the stationary criteria, the low mobility criteria, and the not-at-cell-edge criteria; and a configuration for reporting a plurality of pieces of measurement relaxation, for example, a configuration for reporting, or a configuration for reporting prohibit timer (prohibit timer).

In addition, the plurality of sets of measurement relaxation configurations all correspond to the objects. For example, the measurement relaxation configurations and the objects are in a one-to-one correspondence, in a many-to-one correspondence, or in a one-to-many correspondence.

Optionally, the performing, by the terminal, measurement relaxation on the target object in the plurality of objects based on the first configuration includes:
performing, by the terminal, measurement relaxation on the target object in the plurality of objects when the first configuration includes the plurality of sets of measurement relaxation configurations.

In this implementation, if obtaining the plurality of sets of measurement relaxation configurations, the terminal may measure the target object in the plurality of objects.

In some implementations, the target object is one object. For example, the target object includes the secondary object in the plurality of objects or the primary object in the plurality of objects, or the target object is any object in the plurality of objects. Specifically, the measurement relaxation configuration corresponding to the target object may be used to perform measurement relaxation on the target object.

In another implementation, the target objects are at least two objects in the plurality of objects, and the performing, by the terminal, measurement relaxation on the target object in the plurality of objects includes:
performing, by the terminal, measurement relaxation on each of the at least two objects respectively based on the measurement relaxation configurations corresponding to the at least two objects.

In this implementation, each object has a corresponding measurement relaxation configuration. In this way, measurement relaxation may be performed for each object based on the measurement relaxation configuration corresponding to the object.

When the at least two objects are all of the plurality of objects, it may be implemented that TRP specific measurement relaxation is performed when the plurality of sets of measurement relaxation configurations is configured, that is, measurement relaxation is performed for each object based on the corresponding measurement relaxation configuration.

In some implementations, the method further includes:
performing, by the terminal, measurement relaxation on the cell when the first configuration includes one set of measurement relaxation configurations.

That the terminal performs measurement relaxation for the cell may be that the terminal performs cell specific (cell specific) measurement relaxation.

In the foregoing implementations, a corresponding measurement relaxation manner can be flexibly selected based on a quantity of measurement relaxation configurations, to improve flexibility of the terminal performing measurement relaxation. For example,
if the network side configures one set of measurement relaxation configurations (or the terminal receives one set of measurement relaxation configurations), the terminal performs cell specific measurement relaxation.

If the network side configures more than one set of measurement relaxation configurations (or the terminal receives more than one set of measurement relaxation configurations), the terminal performs at least one of the following:
TRP specific measurement relaxation; and
performing measurement relaxation on the target object in the plurality of objects.

In embodiments of this application, the terminal performs, in the measurement scenario of the plurality of objects, measurement relaxation on the target object in the plurality of objects, where the measurement relaxation includes at least one of the following: RLM measurement relaxation; BFD measurement relaxation; and RRM measurement relaxation. In this way, the measurement relaxation may be performed in the measurement scenario of the plurality of objects, to improve the measurement performance of the terminal.

FIG. 3 is a flowchart of another measurement relaxation method according to an embodiment of this application. As shown in FIG. 3, the method includes the following steps.

Step 301: A network side device sends a downlink message to a terminal, where the downlink message is configured to indicate the terminal to perform measurement relaxation on a target object in a plurality of objects, and the measurement relaxation includes at least one of the following:
RLM measurement relaxation;
BFD measurement relaxation; and
RRM measurement relaxation.

Optionally, the object includes at least one of the following:
a TRP, a cell, an RS, and an RS set.

Optionally, the target object includes a secondary object in the plurality of objects or a primary object in the plurality of objects; or
the target object is any one of the plurality of objects.

Optionally, the method further includes:
receiving, by the network side device, first indication information reported by the terminal, where the first indication information is configured to indicate at least one of the following:
a measurement state of the target object; and
a measurement state change of the target object.

Optionally, when the target object is any one of the plurality of objects, the method further includes:
receiving, by the network side device, second indication information reported by the terminal, where the second indication information is configured to indicate the target object.

Optionally, the target object is an object indicated by the downlink message.

Optionally, the downlink message includes a network side indication, and the network side indication is configured to indicate at least one of the following:
performing, by the terminal, measurement relaxation on the secondary object; and
performing, by the terminal, measurement relaxation on the primary object, where
the target object includes the secondary object or the primary object.

Optionally, the method further includes:
sending, by the network side device, a first configuration to the terminal, where the first configuration includes one set of measurement relaxation configurations or a plurality of sets of measurement relaxation configurations.

It should be noted that, this embodiment is an implementation of a corresponding network side device in the embodiment shown in FIG. 2. For a specific implementation of this embodiment, refer to related descriptions in the embodiment shown in FIG. 2. To avoid repeated descriptions, details are not described again in this embodiment.

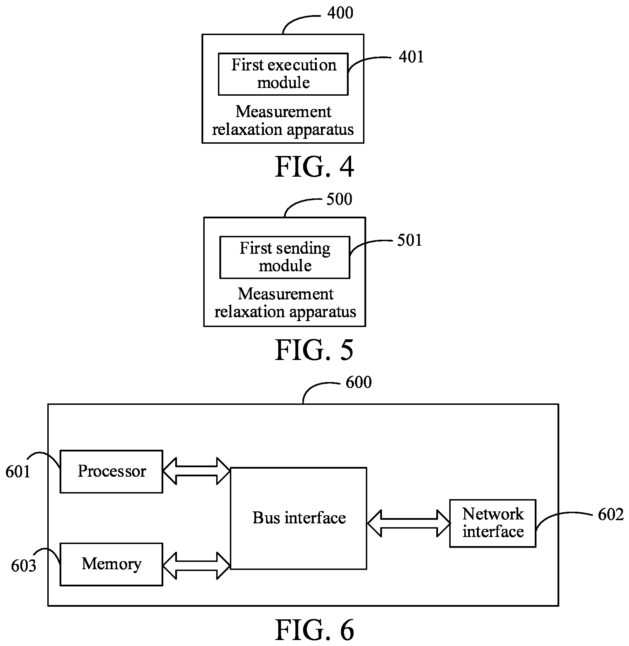

FIG. 4 is a structural diagram of a measurement relaxation apparatus according to an embodiment of this application. As shown in FIG. 4, the measurement relaxation apparatus 400 includes:
a first execution module 401, configured to: perform, when a plurality of objects are configured, measurement relaxation on a target object in the plurality of objects, where the measurement relaxation includes at least one of the following:
RLM measurement relaxation;
BFD measurement relaxation; and
RRM measurement relaxation.

Optionally, the object includes at least one of the following:
a transmission reception point TRP, a cell, a reference signal RS, and a reference signal set RS set.

Optionally, the target object includes a secondary object in the plurality of objects or a primary object in the plurality of objects; or
the target object is any one of the plurality of objects.

In some embodiments, the apparatus further includes:
a first reporting module, configured to report first indication information to a network side, where the first indication information is configured to indicate at least one of the following:
a measurement state of the target object; and
a measurement state change of the target object.

Optionally, the first reporting module is configured to:
report the first indication information to the network side when a preset condition is satisfied.

Optionally, the preset condition includes at least one of the following:
a period condition and a measurement state change condition.

Optionally, when the target object is any one of the plurality of objects, the apparatus further includes:
a second reporting module, configured to report second indication information, where the second indication information is configured to indicate the target object.

Optionally, the target object is determined through at least one of the following:
being specified in a protocol and being indicated by the network side.

In some embodiments, the apparatus further includes:
a receiving module, configured to receive a network side indication, where the network side indication is configured to indicate at least one of the following:
performing, by the terminal, measurement relaxation on the secondary object; and
performing, by the terminal, measurement relaxation on the primary object, where
the target object includes the secondary object or the primary object.

Optionally, the first execution module 401 is configured to:
obtain a first configuration, where the first configuration includes one set of measurement relaxation configurations or a plurality of sets of measurement relaxation configurations; and
perform measurement relaxation on the target object in the plurality of objects based on the first configuration.

Optionally, the first execution module 401 is configured to:
perform measurement relaxation on the target object in the plurality of objects when the first configuration includes the plurality of sets of measurement relaxation configurations.

Optionally, the target object is an object, or
the target objects are at least two objects in the plurality of objects, and the first execution module 401 is configured to:
perform measurement relaxation on each of the at least two objects respectively based on the measurement relaxation configurations corresponding to the at least two objects.

The measurement relaxation apparatus may improve measurement performance of the terminal.

The measurement relaxation apparatus in embodiments of this application may be an electronic device, such as an electronic device having an operating system, or a component in the electronic device, such as an integrated circuit or a chip. For example, the electronic device may be the terminal, or may be a device other than the terminal. For example, the terminal may include but not limited to a type of the terminal listed in embodiments of this application. Other devices may be a server, a network attached storage (Network Attached Storage, NAS). Embodiments of this application are not specifically limited.

The measurement relaxation apparatus provided in embodiments of this application can realize each process realized by the method embodiments of FIG. 2 and achieve the same technical effect. To avoid repetition, details are not described herein again.

FIG. 5 is a structural diagram of another measurement relaxation apparatus according to an embodiment of this application. As shown in FIG. 5, the measurement relaxation apparatus 500 includes:
a first sending module 501, configured to send a downlink message to a terminal, where the downlink message is configured to indicate the terminal to perform measurement relaxation on a target object in a plurality of objects, and the measurement relaxation includes at least one of the following:
RLM measurement relaxation;
BFD measurement relaxation; and
RRM measurement relaxation.

Optionally, the object includes at least one of the following:
a transmission reception point TRP, a cell, a reference signal RS, and a reference signal set RS set.

Optionally, the target object includes a secondary object in the plurality of objects or a primary object in the plurality of objects; or
the target object is any one of the plurality of objects.

In some embodiments, the apparatus further includes:
a first receiving module, configured to receive first indication information reported by the terminal, where the first indication information is configured to indicate at least one of the following:
a measurement state of the target object; and
a measurement state change of the target object.

Optionally, when the target object is any one of the plurality of objects, the apparatus further includes:
a second receiving module, configured to receive second indication information reported by the terminal, where the second indication information is configured to indicate the target object.

Optionally, the target object is an object indicated by the downlink message.

Optionally, the downlink message includes a network side indication, and the network side indication is configured to indicate at least one of the following:
performing, by the terminal, measurement relaxation on the secondary object; and
performing, by the terminal, measurement relaxation on the primary object, where
the target object includes the secondary object or the primary object.

In some embodiments, the apparatus further includes:
a second sending module, configured to send a first configuration to the terminal, where the first configuration includes one set of measurement relaxation configurations or a plurality of sets of measurement relaxation configurations.

The measurement relaxation apparatus may improve measurement performance of the terminal.

The measurement relaxation apparatus in embodiments of this application may be an electronic device, such as an electronic device having an operating system, or a component in the electronic device, such as an integrated circuit or a chip. The electronic device may be the terminal or the network side device.

The measurement relaxation apparatus provided in embodiments of this application can realize each process realized by the method embodiments of FIG. 3 and achieve the same technical effect. To avoid repetition, details are not described herein again.

Optionally, as shown in FIG. 6, embodiments of this application further provide a communication device 600, including a processor 601, a network interface 602, and a memory 603. The memory 603 stores a program or instructions executable on the processor 601. For example, when the communication device 600 is a terminal, steps of the measurement relaxation method embodiments on a terminal side are implemented when the program or the instructions are executed by the processor 601, and same technical effects can be achieved. When the communication device 600 is a network side device, when the program or instructions are executed by the processor 601, steps of the measurement relaxation method embodiments on a network side are implemented, and same technical effects can be achieved. To avoid repetition, details are not described herein again.

Embodiments of this application further provide a communication device, including a processor and a communication interface. The processor or the communication interface is configured to: perform, by a terminal when a plurality of objects are configured, measurement relaxation on a target object in the plurality of objects, where the measurement relaxation includes at least one of the following: RLM measurement relaxation; BFD measurement relaxation; RRM measurement relaxation. The communication device embodiments correspond to the foregoing measurement relaxation method embodiments. Implementation processes and implementations in the foregoing method embodiments are applicable to the communication device embodiments, and a same technical effect can be achieved.

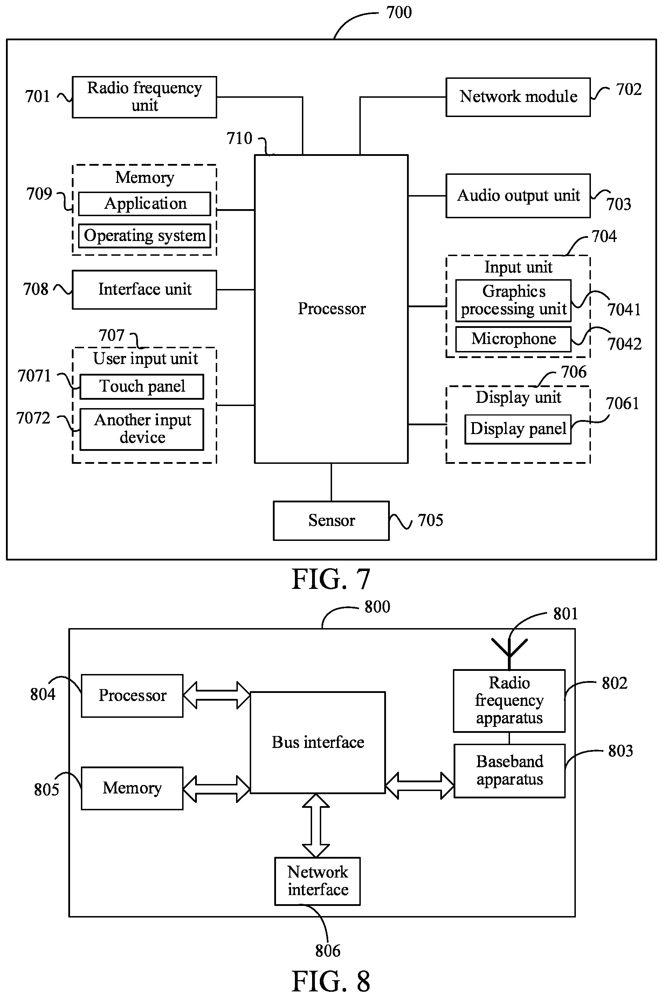

Specifically, FIG. 7 is a schematic hardware diagram a structure of a terminal for implementing an embodiment of this application.

A terminal 700 includes, but is not limited to, at least some parts of components such as a radio frequency unit 701, a network module 702, an audio output unit 703, an input unit 704, a sensor 705, a display unit 706, a user input unit 707, an interface unit 708, a memory 709, a processor 710.

A person skilled in the art may understand that the terminal 700 may further include the power supply (such as a battery) for supplying power to components. The power supply may be logically connected to the processor 710 by a power management system, to implement functions such as charging, discharging, and power consumption management by using the power management system. The terminal structure shown in FIG. 7 does not constitute a limitation on the terminal, and the terminal may include more or fewer components than shown, or combine some components, or have different component arrangements. details are not described herein again.

It should be understood that, in embodiments of this application, the input unit 704 may include a graphics processing unit (Graphics Processing Unit, GPU) 7041 and a microphone 7042. The graphics processing unit 7041 performs processing on image data of a static picture or a video that is obtained by an image acquisition device (for example, a camera) in a video acquisition mode or an image acquisition mode. The display unit 706 may include a display panel 7061, and the display panel 7061 may be configured by using a liquid crystal display, an organic light-emitting diode, or the like. The user input unit 707 includes at least one of a touch panel 7071 and another input device 7072. The touch panel 7071 may also be referred to as a touchscreen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick. Details are not described herein again.

In embodiments of this application, after receiving downlink data from a network side device, a radio frequency unit 701 may transmit the downlink data to the processor 710 for processing. In addition, the radio frequency unit 701 may send uplink data to the network side device. Generally, the radio frequency unit 701 includes, but is not limited to, an antenna, an amplifier, a transceiver, a coupler, a low noise amplifier, a duplexer, and the like.

The memory 709 may be configured to store a software program or instructions and various data. The memory 709 may mainly include a first storage area that stores a program or instructions and a second storage area that stores data. The first storage area may store an operating system, an application or the instructions required by at least one function (for example, a sound playback function and an image display function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR_SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 709 in embodiments of this application includes, but is not limited to, the memories and any other memory of a suitable type.

The processor 710 may include one or more processing units. Optionally, the processor 710 may integrate an application processor and a modem processor. The application processor mainly processes an operation involving an operating system, a user interface, an application, and the like. The modem processor mainly processes a wireless communication signal, such as a baseband processor. It may be understood that the modem processor may alternatively not be integrated in the processor 710.

The processor 710 is configured to: perform, when a plurality of objects are configured, measurement relaxation on a target object in the plurality of objects, where the measurement relaxation includes at least one of the following:
RLM measurement relaxation;
BFD measurement relaxation; and
RRM measurement relaxation.

Optionally, the object includes at least one of the following:
a TRP, a cell, an RS, and an RS set.

Optionally, the target object includes a secondary object in the plurality of objects or a primary object in the plurality of objects; or
the target object is any one of the plurality of objects.

Optionally, the radio frequency unit 701 is configured to:
report first indication information to a network side, where the first indication information is configured to indicate at least one of the following:
a measurement state of the target object; and
a measurement state change of the target object.

Optionally, the radio frequency unit 701 is configured to:
report the first indication information to the network side when a preset condition is satisfied.

Optionally, the preset condition includes at least one of the following:
a period condition and a measurement state change condition.

Optionally, when the target object is any one of the plurality of objects, the radio frequency unit 701 is configured to:
report second indication information to the network side, where the second indication information is configured to indicate the target object.

Optionally, the target object is determined through at least one of the following:
being specified in a protocol and being indicated by the network side.

Optionally, the radio frequency unit 701 is configured to:
receive a network side indication, where the network side indication is configured to indicate at least one of the following:
performing, by the terminal, measurement relaxation on the secondary object; and
performing, by the terminal, measurement relaxation on the primary object, where
the target object includes the secondary object or the primary object.

Optionally, the processor 710 is configured to:
obtain a first configuration, where the first configuration includes one set of measurement relaxation configurations or a plurality of sets of measurement relaxation configurations; and
perform measurement relaxation on the target object in the plurality of objects based on the first configuration.

Optionally, the processor 710 is configured to:
perform measurement relaxation on the target object in the plurality of objects when the first configuration includes the plurality of sets of measurement relaxation configurations.

Optionally, the target object is an object, or
the target objects are at least two objects in the plurality of objects, and the processor 710 is configured to:
perform measurement relaxation on each of the at least two objects respectively based on the measurement relaxation configurations corresponding to the at least two objects.

The foregoing terminal can improve measurement performance of the terminal.

Embodiments of this application further provide a communication device, including a processor and a communication interface. The communication interface is configured to send a downlink message to a terminal, where the downlink message is configured to indicate the terminal to perform measurement relaxation on a target object in a plurality of objects, and the measurement relaxation includes at least one of the following: RLM measurement relaxation; BFD measurement relaxation; and RRM measurement relaxation. The communication device embodiments correspond to the foregoing measurement relaxation method embodiments. Implementation processes and implementations in the foregoing method embodiments are applicable to the communication device embodiments, and a same technical effect can be achieved.

Specifically, embodiments of this application further provide a network side device. As shown in FIG. 8, a network side device 800 include an antenna 801, a radio frequency apparatus 802, a baseband apparatus 803, a processor 804, and a memory 805. The antenna 801 is connected with the radio frequency apparatus 802. In an uplink direction, the radio frequency apparatus 802 receives information through the antenna 801, and sends the received information to the baseband apparatus 803 for processing. In a downlink direction, the baseband apparatus 803 processes information to be sent and sends the information to the radio frequency apparatus 802. The radio frequency apparatus 802 processes the received information and then sends the information by using the antenna 801.

The method performed by the network side device in foregoing embodiments may be implemented in the baseband apparatus 803. The baseband apparatus 803 includes a baseband processor.

The baseband apparatus 803, for example, may include at least one baseband board. The baseband board disposes a plurality of chips. As shown in FIG. 8, one chip is the baseband processor, and is connected with the memory 805 through a bus interface, to use a program of the memory 805, and perform network device operations shown in foregoing method embodiments.

The network side device may further include a network interface 806. The interface is, for example, a common public radio interface (common public radio interface, CPRI).

Specifically, the network side device 800 in this embodiment of the present invention further includes instructions or a program stored in the memory 805 and run on the processor 804. The processor 804 use the instructions or the program stored in the memory 805 to perform the method performed by each module shown in FIG. 5, and a same technical effect is achieved. To avoid repetition, details are not described herein again.

The radio frequency apparatus 802 is configured to send a downlink message to a terminal, where the downlink message is configured to indicate the terminal to perform measurement relaxation on a target object in the plurality of objects, and the measurement relaxation includes at least one of the following:
RLM measurement relaxation;
BFD measurement relaxation; and
RRM measurement relaxation.

Optionally, the object includes at least one of the following:
a TRP, a cell, an RS, and an RS set.

Optionally, the target object includes a secondary object in the plurality of objects or a primary object in the plurality of objects; or
the target object is any one of the plurality of objects.

Optionally, the radio frequency apparatus 802 is further configured to:
receive first indication information reported by the terminal, where the first indication information is configured to indicate at least one of the following:
a measurement state of the target object; and
a measurement state change of the target object.

Optionally, when the target object is any one of the plurality of objects, the radio frequency apparatus 802 is further configured to:
receive second indication information reported by the terminal, where the second indication information is configured to indicate the target object.

Optionally, the target object is an object indicated by the downlink message.

Optionally, the downlink message includes a network side indication, and the network side indication is configured to indicate at least one of the following:
performing, by the terminal, measurement relaxation on the secondary object; and
performing, by the terminal, measurement relaxation on the primary object, where
the target object includes the secondary object or the primary object.

Optionally, the radio frequency apparatus 802 is further configured to:
send a first configuration to the terminal, where the first configuration includes one set of measurement relaxation configurations or a plurality of sets of measurement relaxation configurations.

The foregoing network side device can improve measurement performance of the terminal.

Embodiments of this application further provide a readable storage medium. The readable storage medium stores a program or instructions, and the program or the instructions, when executed by a processor, implements steps of the foregoing measurement relaxation method provided in embodiments of this application.

The processor may be a processor of the terminal in foregoing embodiments. The readable storage medium includes a computer-readable storage medium, for example, a computer read-only memory ROM, a random access memory RAM, a magnetic disk, or an optical disk

Embodiments of this application further provide a chip. The chip includes a processor and a communication interface. The communication interface is coupled to the processor. The processor is configured to run a program or instructions, to implement the processes of the foregoing measurement relaxation method embodiments, and a same technical effect can be achieved. To avoid repetition, details are not described herein again.

It should be understood that, the chip mentioned in embodiments of this application further may be referred to as a system chip, a chip system, a system on chip, or the like.

Embodiments of this application provide a computer program/program product. The computer program/program product is stored in a storage medium. The computer program/program product is executed by at least one processor to implement processes of the measurement relaxation method embodiments, and a same technical effect can be achieved. To avoid repetition, details are not described herein again.

Embodiments of this application further provide a measurement relaxation system. The measurement relaxation system includes a terminal and a network side device. The terminal can be configured to perform steps of the measurement relaxation method on a terminal side provided in embodiments of this application, and the network side device can be configured to perform steps of the measurement relaxation method on a network side provided in embodiments of the present application.

It should be noted that, the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by a sentence "including one ..." does not exclude that there are still other same elements in the process, method, object, or apparatus. In addition, it should be noted that, a range of the method and the apparatus in embodiments of this application is not limited to perform a function in a sequence shown or discussed, and may further include performing the function based on a related function in a substantially same manner or in a reverse sequence. For example, the function may be performed in the sequence shown or discussed. The described method may be performed in a sequence different from the described method, and various steps may alternatively be added, omitted, or combined. In addition, features described with reference to examples may be combined in other examples.

Through the descriptions of the foregoing implementations, a person skilled in the art may clearly understand that the methods in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the current art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in embodiments of this application.

Embodiments of this application are described above with reference to the accompanying drawings. However, this application is not limited to the foregoing specific implementations. The foregoing specific implementations are illustrative instead of imitative. Enlightened by this application, a person of ordinary skill in the art can make many forms without departing from the idea of this application and the scope of protection of the claims. All of the forms fall within the protection of this application.

## Claims

1. A measurement relaxation method, comprising:
performing, by a terminal when a plurality of objects are configured, measurement relaxation on a target object in the plurality of objects, wherein the measurement relaxation comprises at least one of the following:
radio link monitor (RLM) measurement relaxation;
beam failure detection (BFD) measurement relaxation; and
radio resource management (RRM) measurement relaxation.

2. The method according to claim 1, wherein the object comprises at least one of the following:
a transmission reception point TRP, a cell, a reference signal RS, and a reference signal set RS set.

3. The method according to claim 1, wherein the target object comprises a secondary object in the plurality of objects or a primary object in the plurality of objects; or
the target object is any one of the plurality of objects.

4. The method according to claim 1, further comprising:
reporting, by the terminal, first indication information to a network side, wherein the first indication information is configured to indicate at least one of the following:
a measurement state of the target object; and
a measurement state change of the target object.

5. The method according to claim 4, wherein the reporting, by the terminal, first indication information to a network side comprises:
reporting, by the terminal, the first indication information to the network side when a preset condition is satisfied.

6. The method according to claim 5, wherein the preset condition comprises at least one of the following:
a period condition and a measurement state change condition.

7. The method according to any one of claims 1 to 6, wherein when the target object is any one of the plurality of objects, the method further comprises:
reporting, by the terminal, second indication information to the network side, wherein the second indication information is configured to indicate the target object.

8. The method according to any one of claims 1 to 6, wherein the target object is determined through at least one of the following:
being specified in a protocol and being indicated by the network side.

9. The method according to claim 1, further comprising:
receiving, by the terminal, a network side indication, wherein the network side indication is configured to indicate at least one of the following:
performing, by the terminal, measurement relaxation on a secondary object; and
performing, by the terminal, measurement relaxation on a primary object, wherein
the target object comprises the secondary object or the primary object.

10. The method according to claim 1, wherein the performing, by a terminal, measurement relaxation on a target object in the plurality of objects comprises:
obtaining, by the terminal, a first configuration, wherein the first configuration comprises one set of measurement relaxation configurations or a plurality of sets of measurement relaxation configurations; and
performing, by the terminal, measurement relaxation on the target object in the plurality of objects based on the first configuration.

11. The method according to claim 10, wherein the performing, by the terminal, measurement relaxation on the target object in the plurality of objects based on the first configuration comprises:
performing, by the terminal, measurement relaxation on the target object in the plurality of objects when the first configuration comprises the plurality of sets of measurement relaxation configurations.

12. The method according of claim 11, wherein the target object is an object, or
the target objects are at least two objects in the plurality of objects, and the performing, by the terminal, measurement relaxation on the target object in the plurality of objects comprises:
performing, by the terminal, measurement relaxation on each of the at least two objects respectively based on the measurement relaxation configurations corresponding to the at least two objects.

13. A measurement relaxation method, comprising:
sending, by a network side device, a downlink message to a terminal, wherein the downlink message is configured to indicate the terminal to perform measurement relaxation on a target object in a plurality of objects, and the measurement relaxation comprises at least one of the following:
radio link monitor (RLM) measurement relaxation;
beam failure detection (BFD) measurement relaxation; and
radio resource management (RRM) measurement relaxation.

14. The method according to claim 13, wherein the object comprises at least one of the following:
a transmission reception point TRP, a cell, a reference signal RS, and a reference signal set RS set.

15. The method according to claim 13, wherein the target object comprises a secondary object in the plurality of objects or a primary object in the plurality of objects; or
the target object is any one of the plurality of objects.

16. The method according to claim 13, further comprising:
receiving, by the network side device, first indication information reported by the terminal, wherein the first indication information is configured to indicate at least one of the following:
a measurement state of the target object; and
a measurement state change of the target object.

17. The method according to any one of claims 13 to 16, wherein when the target object is any one of the plurality of objects, the method further comprises:
receiving, by the network side device, second indication information reported by the terminal, wherein the second indication information is configured to indicate the target object.

18. The method according to any one of claims 13 to 16, wherein the target object is an object indicated by the downlink message.

19. The method according to claim 13, wherein the downlink message comprises a network side indication, and the network side indication is configured to indicate at least one of the following:
performing, by the terminal, measurement relaxation on a secondary object; and
performing, by the terminal, measurement relaxation on a primary object, wherein
the target object comprises the secondary object or the primary object.

20. The method according to claim 13, further comprising:
sending, by the network side device, a first configuration to the terminal, wherein the first configuration comprises one set of measurement relaxation configurations or a plurality of sets of measurement relaxation configurations.

21. A measurement relaxation apparatus, comprising:
a first execution module, configured to: perform, when a plurality of objects are configured, measurement relaxation on a target object in the plurality of objects, wherein the measurement relaxation comprises at least one of the following:
radio link monitor (RLM) measurement relaxation;
beam failure detection (BFD) measurement relaxation; and
radio resource management (RRM) measurement relaxation.

22. A measurement relaxation apparatus, comprising:
a first sending module, configured to send a downlink message to a terminal, wherein the downlink message is configured to indicate the terminal to perform measurement relaxation on a target object in a plurality of objects, and the measurement relaxation comprises at least one of the following:
radio link monitor (RLM) measurement relaxation;
beam failure detection (BFD) measurement relaxation; and
radio resource management (RRM) measurement relaxation.

23. A terminal, comprising a processor and a memory, wherein the memory stores a program or instructions executable on the processor, and when the program or the instructions are executed by the processor, steps of the measurement relaxation method according to any one of claims 1 to 12 are implemented.

24. A network side device, comprising a processor and a memory, wherein the memory stores a program or instructions executable on the processor, and when the program or instructions are executed by the processor, steps of the measurement relaxation method according to any one of claims 13 to 20 are implemented.

25. A readable storage medium, wherein the readable storage medium stores a program or an instruction, when the program or the instructions are executed by a processor, steps of the measurement relaxation method are implemented according to any one of claims 1 to 12, or when the program or the instructions are executed by the processor, steps of the measurement relaxation method are implemented according to any one of claims 13 to 20.
